# EUROPEAN PATENT APPLICATION

(11) **EP 4 478 634 A1**
(43) Date of publication of application: **18.12.2024**
(21) Application number: 22938116.5
(22) Date of filing: 29.06.2022
(51) Int. Cl.: H04J 13/10

(54) **SIGNAL TRANSMISSION METHOD AND APPARATUS**

(30) Priority: 22.04.2022 CN 202210427671
(71) Applicant: Huawei Technologies Co., Ltd., Shenzhen, Guangdong 518129 (CN)
(72) Inventor: YANG, Yifei, Shenzhen, Guangdong 518129 (CN); YU, Qian, Shenzhen, Guangdong 518129 (CN); PAN, Ju Yan, Shenzhen, Guangdong 518129 (CN); MA, Changzheng, Shenzhen, Guangdong 518129 (CN); WANG, Zhongjun, Shenzhen, Guangdong 518129 (CN); YEO, Lee Guek Doreen, Shenzhen, Guangdong 518129 (CN)
(74) Representative: Gill Jennings & Every LLP
(86) International application number: PCT/CN2022/102476
(87) International publication number: WO 2023/201890

(57) **Abstract**

Embodiments of this application disclose a signal transmission method and apparatus, and relate to the field of communication technologies, to improve a correlation between spread preamble symbols. The method includes: first spreading a preamble symbol based on a first spreading code sequence to generate a first signal, and then sending the first signal to a receiver. The first signal is used to determine a channel impulse response. The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

## Description

Embodiments of this application claim priority to Chinese Patent Application No. 202210427671.0, filed with the China National Intellectual Property Administration on April 22, 2022 and entitled "METHOD FOR GENERATING SPREAD SPECTRUM CODE", which is incorporated in the embodiments of this application by reference in its entirety.

### TECHNICAL FIELD

Embodiments of this application relate to the field of communication technologies, and in particular, to a signal transmission method and apparatus.

### BACKGROUND

In recent years, an ultra-wideband (ultra-wideband, UWB) technology has emerged to be a popular commercial choice for low-power and high-precision positioning. In the UWB technology, a range of a target can be determined by a channel impulse response (channel impulse response, CIR), so the acquisition of the channel impulse response is a critical part of UWB communication and ranging.

In the UWB technology, a transmitter usually needs to send a signal that carries a preamble symbol to a receiver. After receiving the signal, the receiver may obtain a CIR based on a correlation between the signal and a known transmission sequence, and then obtain a correlation peak by using the CIR to determine a ranging timestamp to implement ranging.

In the conventional technology, a deterministic random binary sequence may be used as a spread spectrum code to spread a preamble symbol, so as to improve security of the preamble symbol. However, due to intersymbol interference (intersymbol interference, ISI), the use of the deterministic random binary sequence for spread spectrum results in a decrease in the correlation of the preamble symbol. Therefore, how to improve a correlation between spread preamble symbols is one of the problems that need to be urgently resolved by a person skilled in the art.

### SUMMARY

Embodiments of this application provide a signal transmission method and apparatus, to improve a correlation between spread preamble symbols. To achieve the foregoing objectives, the following technical solutions are used in embodiments of this application.

According to a first aspect, an embodiment of this application provides a signal transmission method. The method includes: first spreading a preamble symbol based on a first spreading code sequence to generate a first signal, and then sending the first signal to a receiver. The first signal is used to determine a channel impulse response. The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

According to the signal transmission method provided in this embodiment of this application, the preamble symbol is spread by using the first spreading code sequence. Because there is a guard symbol in each spreading code group in the first spreading code sequence, the guard symbol can suppress intersymbol interference between spreading code groups. In addition, because there are a plurality of same spreading codes in each spreading code group, the preamble symbol is spread by using a spreading code group including a plurality of same spreading codes, so that a correlation between preamble symbols can be reserved. Therefore, in comparison with a case in which a preamble symbol is spread by using a deterministic random binary sequence as a spreading code, the signal transmission method provided in this embodiment of this application can improve a correlation between spread preamble symbols.

In addition, in the signal transmission method provided in this embodiment of this application, the preamble symbol is spread by using the first spreading code sequence. Because the plurality of spreading code groups include the at least two spreading code groups with different spreading codes, randomness of the spreading code sequence is improved. Therefore, compared with spreading the preamble symbol by using all-one code or a specified ternary/binary code as a spreading code, security of the spread preamble symbol can be improved in the signal transmission method provided in this embodiment of this application.

In a possible implementation, first N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the plurality of spreading code groups may be guard symbols. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

For example, a spreading code group 1 is adjacent to a spreading code group 2. If the spreading code group 1 includes a plurality of spreading codes A1 and guard symbols, the spreading code group 2 includes a plurality of same spreading codes (for example, A2) other than A1 and guard symbols.

It may be understood that, spreading codes of two adjacent spreading code groups in the first spreading code sequence are different, so that randomness of the first spreading code sequence can be improved, thereby improving security of the spread preamble symbol by using the first spreading code sequence.

According to a second aspect, an embodiment of this application provides another signal transmission method. The method includes: receiving a first signal sent by a transmitter, and determining a channel impulse response based on a first spreading code sequence and the first signal. The first signal is a signal generated by spreading the first spreading code sequence, the first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

According to the signal transmission method provided in this embodiment of this application, the channel impulse response is determined based on the first spreading code sequence and the first signal. Because there is a guard symbol in each spreading code group in the first spreading code sequence, the guard symbol can suppress intersymbol interference between spreading code groups. Therefore, in comparison with a case in which a preamble symbol is spread by using a deterministic random binary sequence as a spreading code, the signal transmission method provided in this embodiment of this application can improve a correlation between spread preamble symbols.

In addition, in the signal transmission method provided in this embodiment of this application, the channel impulse response is determined based on the first spreading code sequence and the first signal. Because the plurality of spreading code groups include the at least two spreading code groups with different spreading codes, randomness of the spreading code sequence is improved. Therefore, compared with spreading the preamble symbol by using all-one code or a specified ternary/binary code as a spreading code, security of the spread preamble symbol can be improved in the signal transmission method provided in this embodiment of this application.

In a possible implementation, first N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the plurality of spreading code groups may be guard symbols. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

For example, a spreading code group 1 is adjacent to a spreading code group 2. If the spreading code group 1 includes a plurality of spreading codes A1 and guard symbols, the spreading code group 2 includes a plurality of same spreading codes (for example, A2) other than A1 and guard symbols.

It may be understood that, spreading codes of two adjacent spreading code groups in the first spreading code sequence are different, so that randomness of the first spreading code sequence can be improved, thereby improving security of the spread preamble symbol by using the first spreading code sequence.

According to a third aspect, an embodiment of this application provides another signal transmission method. The method includes: receiving a second signal sent by a transmitter; replacing a first bit and/or a last bit of each spreading code group in the second spreading code sequence with a guard symbol to obtain a third spreading code sequence; and determining a channel impulse response based on the third spreading code sequence and the second signal.

According to the signal transmission method provided in this embodiment of this application, the channel impulse response is determined based on the third spreading code sequence and the second signal. Because there is a guard symbol in each spreading code group in the third spreading code sequence, the guard symbol can suppress intersymbol interference between spreading code groups. Therefore, in comparison with a case in which a preamble symbol is spread by using a deterministic random binary sequence as a spreading code, the signal transmission method provided in this embodiment of this application can improve a correlation between spread preamble symbols.

In addition, in the signal transmission method provided in this embodiment of this application, the channel impulse response is determined based on the third spreading code sequence and the second signal. Because the plurality of spreading code groups include the at least two spreading code groups with different spreading codes, randomness of the spreading code sequence is improved. Therefore, compared with spreading the preamble symbol by using all-one code or a specified ternary/binary code as a spreading code, security of the spread preamble symbol can be improved in the signal transmission method provided in this embodiment of this application.

In a possible implementation, first N bits of each spreading code group in the second spreading code sequence may be replaced with guard symbols to obtain the third spreading code sequence. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the second spreading code sequence may be replaced with guard symbols to obtain the third spreading code sequence. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the second spreading code sequence may be replaced with guard symbols to obtain the third spreading code sequence. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

According to a fourth aspect, an embodiment of this application provides a signal transmission apparatus. The signal transmission apparatus includes a generation unit and a sending unit. The generation unit is configured to spread a preamble symbol based on a first spreading code sequence to generate a first signal, where the first signal is used to determine a channel impulse response; and the sending unit is configured to send the first signal to a receiver. The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

According to a fifth aspect, an embodiment of this application provides another signal transmission apparatus. The signal transmission apparatus includes a receiving unit and a determining unit. The receiving unit is configured to receive a first signal sent by a transmitter, where the first signal is a signal generated by spreading a first spreading code sequence; and the determining unit is configured to determine a channel impulse response based on the first spreading code sequence and the first signal. The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

According to a sixth aspect, an embodiment of this application provides another signal transmission apparatus. The signal transmission apparatus includes a receiving unit, a processing unit, and a determining unit. The receiving unit is configured to receive a second signal sent by a transmitter, and the second signal is a signal generated by spreading a second spreading code sequence; the processing unit is configured to replace a first bit and/or a last bit of each spreading code group in the second spreading code sequence with a guard symbol to obtain a third spreading code sequence; and the determining unit is configured to determine a channel impulse response according to the third spreading code sequence and the second signal. The second spreading code sequence includes a plurality of spreading code groups, and each spreading code group includes a plurality of same spreading codes.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

According to a seventh aspect, an embodiment of this application further provides a signal transmission apparatus. The signal transmission apparatus includes at least one processor, and when the at least one processor executes program code or instructions, the method according to any one of the first aspect or the possible implementations of the first aspect is implemented.

Optionally, the signal processing apparatus may further include at least one memory, and the at least one memory is configured to store the program code or the instructions.

According to an eighth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to a ninth aspect, an embodiment of this application further provides a computer-readable storage medium, configured to store a computer program. The computer program is configured to implement the method according to any one of the first aspect or the possible implementations of the first aspect.

According to a tenth aspect, an embodiment of this application further provides a computer program product including instructions. When the computer program product runs on a computer, the computer is enabled to implement the method according to any one of the first aspect or the possible implementations of the first aspect.

The signal transmission apparatus, the computer storage medium, the computer program product, and the chip provided in this embodiment are all configured to perform the method provided above. Therefore, for beneficial effects that can be achieved by the signal transmission apparatus, the computer storage medium, the computer program product, and the chip, refer to the beneficial effects in the method provided above. Details are not described herein again.

### BRIEF DESCRIPTION OF DRAWINGS

To describe the technical solutions in embodiments of this application more clearly, the following briefly describes the accompanying drawings required for describing the embodiments. It is apparent that the accompanying drawings in the following description show merely some embodiments of this application, and a person of ordinary skill in the art may derive other drawings from these accompanying drawings without creative efforts.
FIG. 1 is a schematic flowchart of a signal transmission method according to an embodiment of this application;
FIG. 2 is a schematic flowchart of another signal transmission method according to an embodiment of this application;
FIG. 3 is a schematic flowchart of still another signal transmission method according to an embodiment of this application;
FIG. 4 is a schematic flowchart of still another signal transmission method according to an embodiment of this application;
FIG. 5 is a schematic flowchart of still another signal transmission method according to an embodiment of this application;
FIG. 6 is a schematic diagram of a channel impulse response power according to an embodiment of this application;
FIG. 7 is a schematic diagram of another channel impulse response power according to an embodiment of this application;
FIG. 8 is a schematic diagram of still another channel impulse response power according to an embodiment of this application;
FIG. 9 is a schematic diagram of still another channel impulse response power according to an embodiment of this application;
FIG. 10 is a schematic diagram of a structure of a signal transmission apparatus according to an embodiment of this application;
FIG. 11 is a schematic diagram of a structure of another signal transmission apparatus according to an embodiment of this application;
FIG. 12 is a schematic diagram of a structure of still another signal transmission apparatus according to an embodiment of this application;
FIG. 13 is a schematic diagram of a structure of a chip according to an embodiment of this application; and
FIG. 14 is a schematic diagram of a structure of an electronic device according to an embodiment of this application.

### DESCRIPTION OF EMBODIMENTS

The following clearly and completely describes the technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In the specification and accompanying drawings of this application, the terms "first", "second", and the like are intended to distinguish between different objects or distinguish between different processing of a same object, but do not indicate a specific order of the objects.

In addition, the terms "include", "have", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that in the descriptions of embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a relative concept in a specific manner.

In the description of embodiment of this application, unless otherwise stated, "a plurality of" means two or more than two.

In recent years, the UWB technology has emerged to be a popular commercial choice for low-power and high-precision positioning. In the UWB technology, a range of a target can be determined by a CIR, so the acquisition of the CIR is a critical part of UWB communication and ranging.

In the UWB technology, a transmitter usually needs to send a signal that carries a preamble symbol (preamble) to a receiver. After receiving the signal, the receiver may obtain a CIR by using a correlation between the signal and a known transmission sequence, and then obtain a correlation peak by using the CIR to determine a ranging timestamp to implement ranging.

In the conventional technology, a deterministic random binary sequence may be used as a spread spectrum code to spread a preamble symbol, so as to improve security of the preamble symbol. However, due to intersymbol interference, the use of the deterministic random binary sequence for spread spectrum results in a decrease in the correlation of the preamble symbol.

Therefore, an embodiment of this application provides a signal transmission method, to improve a correlation between spread preamble symbols. The method may be used in a signal transmission system, the signal transmission system includes a transmitter and a receiver, and both the transmitter and the receiver include an ultra-wideband system.

It should be noted that, in embodiments of this application, a device configured to send a signal is referred to as a transmitter, and a device configured to receive a signal is referred to as a receiver. The transmitter may also receive a signal, and the receiver may also send a signal. A function of the device is not limited in embodiments of this application.

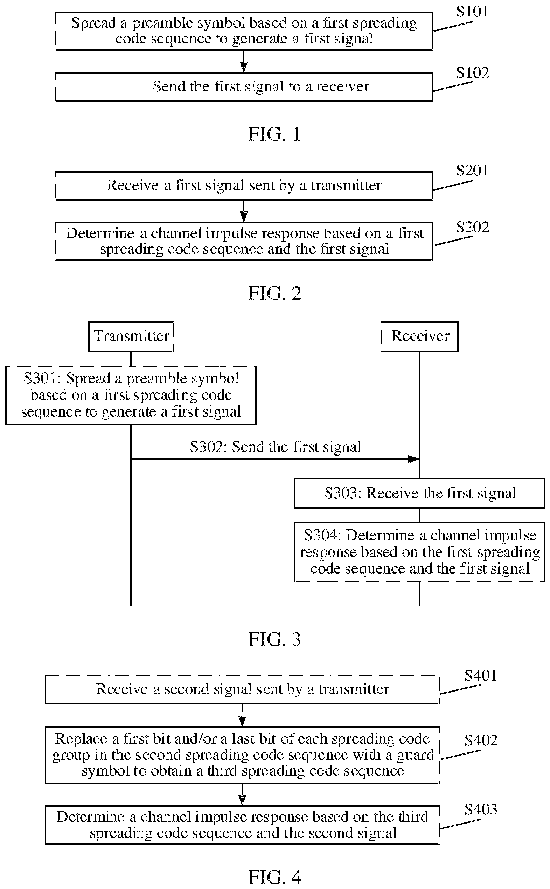

FIG. 1 is a schematic flowchart of a signal transmission method according to an embodiment of this application. The method is applied to a transmitter in a signal transmission system. The transmitter includes an ultra-wideband system. The method may include the following procedure.

S101: Spread a preamble symbol based on a first spreading code sequence to generate a first signal.

The first signal is used to determine a channel impulse response. The first signal may also be referred to as a channel impulse response training sequence (CIR training sequence, CTS).

The preamble symbol may be generated by spreading a preamble or not spreading a preamble. For example, if the preamble has 31 bits, and the preamble is spread by 16 times, a preamble symbol with a length of 496 may be obtained.

The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

In a possible implementation, first N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the plurality of spreading code groups may be guard symbols. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

For example, a spreading code group 1 is adjacent to a spreading code group 2. If the spreading code group 1 includes a plurality of spreading codes A1 and guard symbols, the spreading code group 2 includes a plurality of same spreading codes (for example, A2) other than A1 and guard symbols.

It may be understood that, spreading codes of two adjacent spreading code groups in the first spreading code sequence are different, so that randomness of the first spreading code sequence can be improved, thereby improving security of the spread preamble symbol by using the first spreading code sequence.

In a possible implementation, spreading codes of the plurality of spreading code groups may be different.

In a possible implementation, the transmitter may spread the preamble symbol based on the first spreading code sequence of Group=4, Ntr=3, and Ntz=1 to generate the first signal. Group represents a quantity of spreading code groups in the spreading code sequence, Ntr is a quantity of spreading codes in the spreading code group, Ntz is a quantity of guard symbols in the spreading code group, and Group=4, Ntr=3, and Ntz=1. In other words, the first spreading code sequence includes four spreading code groups, and each spreading code group includes three spreading codes and one guard symbol.

In a possible implementation, the transmitter may determine spreading codes of each spreading code group from a plurality of independent codes.

For example, the transmitter may determine the spreading code of the spreading code group from eight independent codes, namely, A_0, A_1, A_2, A_3, A_4, A_5, A_6, and A_7. For example, A0 is determined as a spreading code of a spreading code group 1, and A1 is determined as a spreading code of a spreading code group 2. Values of A_0, A_1, A_2, A_3, A_4, A_5, A_6, and A_7 may be 0, 1, 2, 3, 4, 5, 6, 7, or another value. This is not limited in this embodiment of this application.

S102: Send the first signal to a receiver.

A specific method for sending the first signal to the receiver may be processed by using any method that can be thought of by a person skilled in the art. This is not specifically limited in this embodiment of this application. For example, the transmitter may send the first signal to the receiver by using a UWB communication technology. For another example, the transmitter may also send the first signal to the receiver by using an impulse radio (impulse radio UWB, IR-UWB) communication technology.

According to the signal transmission method provided in this embodiment of this application, the channel impulse response is determined based on a third spreading code sequence and a second signal. Because there is a guard symbol in each spreading code group in the third spreading code sequence, the guard symbol can suppress intersymbol interference between spreading code groups. Therefore, in comparison with a case in which a preamble symbol is spread by using a deterministic random binary sequence as a spreading code, the signal transmission method provided in this embodiment of this application can improve a correlation between spread preamble symbols.

In addition, in the signal transmission method provided in this embodiment of this application, the channel impulse response is determined based on the third spreading code sequence and the second signal. Because the plurality of spreading code groups include the at least two spreading code groups with different spreading codes, randomness of the spreading code sequence is improved. Therefore, compared with spreading the preamble symbol by using all-one code or a specified ternary/binary code as a spreading code, security of the spread preamble symbol can be improved in the signal transmission method provided in this embodiment of this application.

FIG. 2 is a schematic flowchart of another signal transmission method according to an embodiment of this application. The method is applied to a receiver in a signal transmission system. The receiver includes an ultra-wideband system. The method may include the following procedure.

S201: Receive a first signal sent by a transmitter.

A specific method for receiving the first signal sent by the transmitter may be processed by using any method that can be thought of by a person skilled in the art. This is not specifically limited in this embodiment of this application. For example, the receiver may receive the first signal by using a UWB communication technology. For another example, the receiver may also receive the first signal by using an IR-UWB communication technology.

In a possible implementation, first N bits of each spreading code group in a plurality of spreading code groups may be guard symbols. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the plurality of spreading code groups may be guard symbols. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

For example, a spreading code group 1 is adjacent to a spreading code group 2. If the spreading code group 1 includes a plurality of spreading codes A1 and guard symbols, the spreading code group 2 includes a plurality of same spreading codes (for example, A2) other than A1 and guard symbols.

It may be understood that, spreading codes of two adjacent spreading code groups in the first spreading code sequence are different, so that randomness of the first spreading code sequence can be improved, thereby improving security of the spread preamble symbol by using the first spreading code sequence.

S202: Determine a channel impulse response based on a first spreading code sequence and the first signal.

In a possible implementation, the receiver may first despread the first signal by using the first spreading code sequence to obtain a preamble symbol, and then determine the channel impulse response CIR based on the obtained preamble symbol.

According to the signal transmission method provided in this embodiment of this application, the channel impulse response is determined based on the first spreading code sequence and the first signal. Because there is a guard symbol in each spreading code group in the first spreading code sequence, the guard symbol can suppress intersymbol interference between spreading code groups. Therefore, in comparison with a case in which a preamble symbol is spread by using a deterministic random binary sequence as a spreading code, the signal transmission method provided in this embodiment of this application can improve a correlation between spread preamble symbols.

In addition, in the signal transmission method provided in this embodiment of this application, the channel impulse response is determined based on the first spreading code sequence and the first signal. Because the plurality of spreading code groups include the at least two spreading code groups with different spreading codes, randomness of the spreading code sequence is improved. Therefore, compared with spreading the preamble symbol by using all-one code or a specified ternary/binary code as a spreading code, security of the spread preamble symbol can be improved in the signal transmission method provided in this embodiment of this application.

FIG. 3 is a schematic flowchart of still another signal transmission method according to an embodiment of this application. The method is applied to a signal transmission system. The signal transmission system includes a transmitter and a receiver. Both the transmitter and the receiver include an ultra-wideband system. The method may include the following procedure.

S301: The transmitter spreads a preamble symbol based on a first spreading code sequence to generate a first signal.

The first signal is used to determine a channel impulse response. The first signal may also be referred to as aCTS.

The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

In a possible implementation, first N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the plurality of spreading code groups may be guard symbols. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

For example, a spreading code group 1 is adjacent to a spreading code group 2. If the spreading code group 1 includes a plurality of spreading codes A1 and guard symbols, the spreading code group 2 includes a plurality of same spreading codes (for example, A2) other than A1 and guard symbols.

It may be understood that, spreading codes of two adjacent spreading code groups in the first spreading code sequence are different, so that randomness of the first spreading code sequence can be improved, thereby improving security of the spread preamble symbol by using the first spreading code sequence.

In a possible implementation, spreading codes of the plurality of spreading code groups may be different.

In a possible implementation, the transmitter may spread the preamble symbol based on the first spreading code sequence of Group=4, Ntr=3, and Ntz=1 to generate the first signal. Group represents a quantity of spreading code groups in the spreading code sequence, Ntr is a quantity of spreading codes in the spreading code group, Ntz is a quantity of guard symbols in the spreading code group, and Group=4, Ntr=3, and Ntz=1. In other words, the first spreading code sequence includes four spreading code groups, and each spreading code group includes three spreading codes and one guard symbol.

In a possible implementation, the transmitter may determine spreading codes of each spreading code group from a plurality of independent codes.

For example, the transmitter may determine the spreading code of the spreading code group from eight independent codes, namely, A_0, A_1, A_2, A_3, A_4, A_5, A_6, and A_7. For example, A0 is determined as a spreading code of a spreading code group 1, and A1 is determined as a spreading code of a spreading code group 2. Values of A_0, A_1, A_2, A_3, A_4, A_5, A_6, and A_7 may be 0, 1, 2, 3, 4, 5, 6, 7, or another value. This is not limited in this embodiment of this application.

S302: The transmitter sends the first signal to a receiver.

A specific method for sending the first signal to the receiver may be processed by using any method that can be thought of by a person skilled in the art. This is not specifically limited in this embodiment of this application. For example, the transmitter may send the first signal to the receiver by using a UWB communication technology. For another example, the transmitter may also send the first signal to the receiver by using an IR-UWB communication technology.

S303: The receiver receives the first signal sent by the transmitter.

A specific method for receiving the first signal sent by the transmitter may be processed by using any method that can be thought of by a person skilled in the art. This is not specifically limited in this embodiment of this application. For example, the receiver may receive the first signal by using a UWB communication technology. For another example, the receiver may also receive the first signal by using an IR-UWB communication technology.

In a possible implementation, first N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the plurality of spreading code groups may be guard symbols. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the plurality of spreading code groups may be guard symbols. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

For example, a spreading code group 1 is adjacent to a spreading code group 2. If the spreading code group 1 includes a plurality of spreading codes A1 and guard symbols, the spreading code group 2 includes a plurality of same spreading codes (for example, A2) other than A1 and guard symbols.

It may be understood that, spreading codes of two adjacent spreading code groups in the first spreading code sequence are different, so that randomness of the first spreading code sequence can be improved, thereby improving security of the spread preamble symbol by using the first spreading code sequence.

S304: The receiver determines a channel impulse response based on the first spreading code sequence and the first signal.

In a possible implementation, the receiver may first despread the first signal by using the first spreading code sequence to obtain a preamble symbol, and then determine the channel impulse response based on the obtained preamble symbol.

According to the signal transmission method provided in this embodiment of this application, the channel impulse response is determined based on the first spreading code sequence and the first signal. Because there is a guard symbol in each spreading code group in the first spreading code sequence, the guard symbol can suppress intersymbol interference between spreading code groups. Therefore, in comparison with a case in which a preamble symbol is spread by using a deterministic random binary sequence as a spreading code, the signal transmission method provided in this embodiment of this application can improve a correlation between spread preamble symbols.

In addition, in the signal transmission method provided in this embodiment of this application, the channel impulse response is determined based on the first spreading code sequence and the first signal. Because the plurality of spreading code groups include the at least two spreading code groups with different spreading codes, randomness of the spreading code sequence is improved. Therefore, compared with spreading the preamble symbol by using all-one code or a specified ternary/binary code as a spreading code, security of the spread preamble symbol can be improved in the signal transmission method provided in this embodiment of this application.

FIG. 4 is a schematic flowchart of still another signal transmission method according to an embodiment of this application. The method is applied to a receiver in a signal transmission system, and the transmitter includes an ultra-wideband system. The method may include the following procedure.

S401: Receive a second signal sent by the transmitter.

The second signal is a signal generated by spreading a second spreading code sequence, the second spreading code sequence includes a plurality of spreading code groups, and each spreading code group includes a plurality of same spreading codes.

A specific method for receiving the second signal sent by the transmitter may be processed by using any method that can be thought of by a person skilled in the art. This is not specifically limited in this embodiment of this application. For example, the receiver may receive the second signal by using a UWB communication technology. For another example, the receiver may also receive the second signal by using an IR-UWB communication technology.

S402: Replace a first bit and/or a last bit of each spreading code group in the second spreading code sequence with a guard symbol to obtain a third spreading code sequence.

In a possible implementation, first N bits of each spreading code group in the second spreading code sequence may be replaced with guard symbols to obtain the third spreading code sequence. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the second spreading code sequence may be replaced with guard symbols to obtain the third spreading code sequence. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the second spreading code sequence may be replaced with guard symbols to obtain the third spreading code sequence. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

In a possible implementation, a first bit of the second spreading code sequence of Ngroup=4, Ntr=4, and Ntz=0 may be replaced with a guard symbol to obtain a third spreading code sequence of Ngroup=4, Ntr=4, and Ntz=1.

Group represents a quantity of spreading code groups in the spreading code sequence, Ntr is a quantity of spreading codes in the spreading code group, and Ntz is a quantity of guard symbols in the spreading code group.

Ngroup=4, Ntr=4, and Ntz=0 indicate that the second spreading code sequence includes four spreading code groups, and each spreading code group includes four spreading codes.

NGroup=4, Ntr=3, and Ntz=1 indicate that the third spreading code sequence includes four spreading code groups, and each spreading code group includes three spreading codes and one guard symbol.

In another possible implementation, a last bit of the second spreading code sequence of Ngroup=4, Ntr=4, and Ntz=0 may be replaced with a guard symbol to obtain a third spreading code sequence of Ngroup=4, Ntr=4, and Ntz=1.

S403: Determine a channel impulse response based on the third spreading code sequence and the second signal.

In a possible implementation, the receiver may first despread the second signal by using the third spreading code sequence to obtain a preamble symbol, and then determine the channel impulse response based on the obtained preamble symbol.

According to the signal transmission method provided in this embodiment of this application, the channel impulse response is determined based on a third spreading code sequence and a second signal. Because there is a guard symbol in each spreading code group in the third spreading code sequence, the guard symbol can suppress intersymbol interference between spreading code groups. Therefore, in comparison with a case in which a preamble symbol is spread by using a deterministic random binary sequence as a spreading code, the signal transmission method provided in this embodiment of this application can improve a correlation between spread preamble symbols.

In addition, in the signal transmission method provided in this embodiment of this application, the channel impulse response is determined based on the third spreading code sequence and the second signal. Because the plurality of spreading code groups include the at least two spreading code groups with different spreading codes, randomness of the spreading code sequence is improved. Therefore, compared with spreading the preamble symbol by using all-one code or a specified ternary/binary code as a spreading code, security of the spread preamble symbol can be improved in the signal transmission method provided in this embodiment of this application.

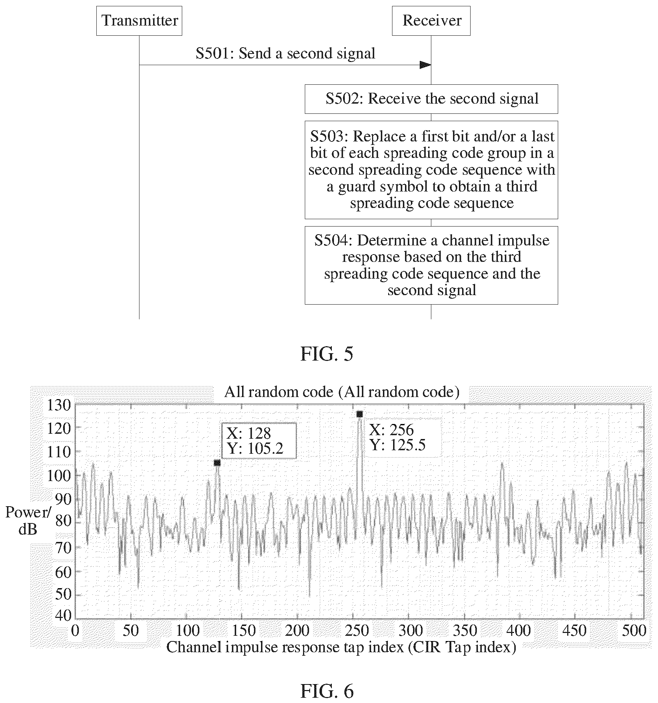

FIG. 5 is a schematic flowchart of still another signal transmission method according to an embodiment of this application. The method is used in a signal transmission system. The signal transmission system includes a transmitter and a receiver. Both the transmitter and the receiver include an ultra-wideband system. The method may include the following procedure.

S501: The transmitter sends a second signal to the receiver.

The second signal is a signal generated by spreading a second spreading code sequence, the second spreading code sequence includes a plurality of spreading code groups, and each spreading code group includes a plurality of same spreading codes.

A specific method for sending the second signal by the transmitter may be processed by using any method that can be thought of by a person skilled in the art. This is not specifically limited in this embodiment of this application. For example, the transmitter may send the second signal by using a UWB communication technology. For another example, the transmitter may send the second signal by using an IR-UWB communication technology.

S502: The receiver receives the second signal sent by the transmitter.

A specific method for receiving the second signal sent by the transmitter may be processed by using any method that can be thought of by a person skilled in the art. This is not specifically limited in this embodiment of this application. For example, the receiver may receive the second signal by using a UWB communication technology. For another example, the receiver may also receive the second signal by using an IR-UWB communication technology.

S503: The receiver replaces a first bit and/or a last bit of each spreading code group in the second spreading code sequence with a guard symbol to obtain a third spreading code sequence.

In a possible implementation, first N bits of each spreading code group in the second spreading code sequence may be replaced with guard symbols to obtain the third spreading code sequence. N may satisfy: N=Ngroup-Ntr, where Ngroup is a quantity of symbols in a spreading code group, and Ntr is a quantity of spreading codes in the spreading code group.

In another possible implementation, last N bits of each spreading code group in the second spreading code sequence may be replaced with guard symbols to obtain the third spreading code sequence. N may satisfy: N=Ngroup-Ntr, where Ngroup is a quantity of symbols in a spreading code group, and Ntr is a quantity of spreading codes in the spreading code group.

In still another possible implementation, first K bits and last J bits of each spreading code group in the second spreading code sequence may be replaced with guard symbols to obtain the third spreading code sequence. K and J may be equal or may be different.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

In a possible implementation, a first bit of the second spreading code sequence of Ngroup=4, Ntr=4, and Ntz=0 may be replaced with a guard symbol to obtain a third spreading code sequence of Ngroup=4, Ntr=4, and Ntz=1.

Group represents a quantity of spreading code groups in the spreading code sequence, Ntr is a quantity of spreading codes in the spreading code group, and Ntz is a quantity of guard symbols in the spreading code group.

Ngroup=4, Ntr=4, and Ntz=0 indicate that the second spreading code sequence includes four spreading code groups, and each spreading code group includes four spreading codes.

NGroup=4, Ntr=3, and Ntz=1 indicate that the third spreading code sequence includes four spreading code groups, and each spreading code group includes three spreading codes and one guard symbol.

In another possible implementation, a last bit of the second spreading code sequence of Ngroup=4, Ntr=4, and Ntz=0 may be replaced with a guard symbol to obtain a third spreading code sequence of Ngroup=4, Ntr=4, and Ntz=1.

S504: The receiver determines a channel impulse response based on a third spreading code sequence and the second signal.

In a possible implementation, the receiver may first despread the second signal by using the third spreading code sequence to obtain a preamble symbol, and then determine the channel impulse response based on the obtained preamble symbol.

Refer to Table 1. Table 1 shows a plurality of examples of a spreading code (spreading code sequence) design provided in embodiments of this application and a spreading code design used in an existing institute of electrical and electronics engineers (institute of electrical and electronics engineers, IEEE) 802.15.4 standard.

In Table 1, A_0, A_1, A_2, A_3, A_4, A_5, A_6, and A_7 represent independent codes (security codes). Values of A_0, A_1, A_2, A_3, A_4, A_5, A_6, and A_7 may be 0, 1, 2, 3, 4, 5, 6, 7, or another value. This is not limited in this embodiment of this application. The CTS code is a spreading code of a channel impulse response training sequence. It can be learned that, in a proposed special spread mode V1, different spreading codes are separated by adding a guard symbol 0 after each group of same spreading codes, while in the proposed special spread mode, different spreading codes are separated by adding a guard symbol 0 before each group of same spreading codes, and good correlation property of a carefully designed ternary preamble code is preserved by adopting an all-one code in each spreading code group and separating the groups with the guard symbol.

**Table 1**

| | Sequence number (Index) | 0 | 1 | 2 | 3 | 4 | 5 | 6 | 7 |
|---|---|---|---|---|---|---|---|---|---|
| | Security code (Security code) | A_0 | A_1 | A_2 | A_3 | A_4 | A_5 | A_6 | A_7 |
| All-random spread mode (All-random spread mode) | CTS code (CTS code) | A_0 | A_1 | A_2 | A_3 | A_4 | A_5 | A_6 | A_7 |
| All-one spread mode (All-one spread mode) | CTS code (CTS code) | 1 | 1 | 1 | 1 | 1 | 1 | 1 | 1 |
| Proposed special spread mode V1 (Proposed special spread mode V1) (at Ngroup=4, Ntr=3, and Ntz=1) | CTS code (CTS code) | A_0 | A_0 | A_0 | 0 | A_1 | A_1 | A_1 | 0 |
| Proposed special spread mode V2 (Proposed special spread mode V2) used by a transmitter (at Ngroup=4, Ntr=4, Ntz=0, and Nrz=1) TX | | A_0 | A_0 | A_0 | A_0 | A_1 | A_1 | A_1 | A_1 |
| Proposed special spread mode V2 (Proposed special spread mode V2) used by a receiver (at Ngroup=4, Ntr=4, Ntz=0, and Nrz=1) RX | | 0 | A_0 | A_0 | A_0 | 0 | A_1 | A_1 | A_1 |

FIG. 6 to FIG. 9 respectively show simulation use of 4 different spreading codes and the same preamble. The channel impulse response obtained by the signal is transmitted through an additive white gaussian noise (additive white gaussian noise, AWGN) channel.

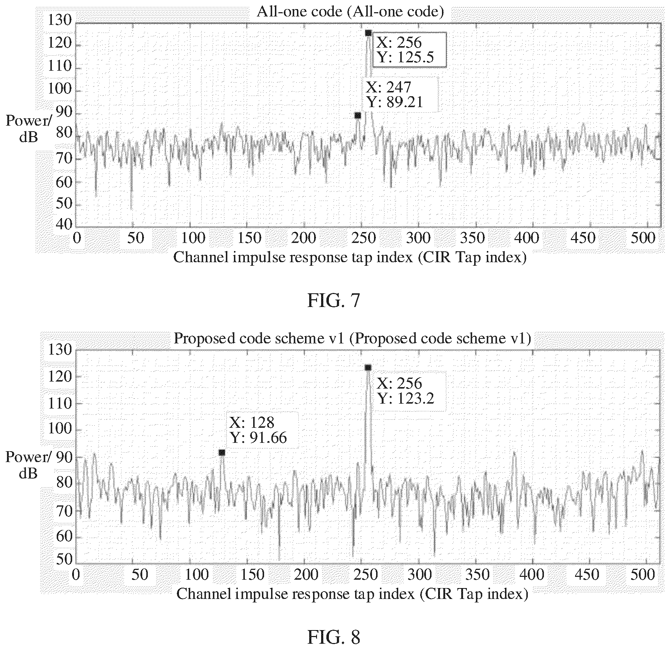

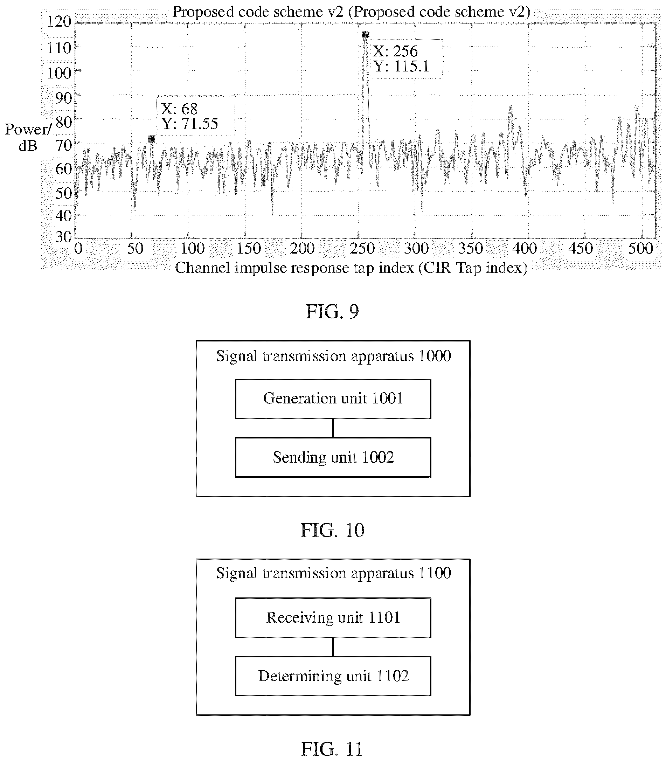

FIG. 6 is a channel impulse response acquired by using an all-random spread code. FIG. 7 is a channel impulse response acquired by using an all-one spread code. FIG. 8 is a channel impulse response acquired by using a spreading code in a proposed special spread mode V1. FIG. 9 is a channel impulse response acquired by using a spreading code in a proposed special spread mode V2.

It can be learned from FIG. 6 to FIG. 9 that a peak at an index 256 is a desired signal peak. It is worth mentioning that, ideally, the greater the power difference between a true signal peak and a noise peak, the better to avoid mis-detection during ranging.

It can be learned from FIG. 6 that, if the all-random spread code is used, the peak power difference is only about 20.3 dB.

It can be learned from FIG. 7 that, if an all-one spread code (that is, an all-one code) is used, the peak power difference is 36.3 dB.

It can be learned from FIG. 8 that, when a special spreading code solution 1 (that is, the spreading code in the proposed special spread mode V1) provided in this embodiment of this application is used, the peak power difference is increased to about 31.5 dB, which is also close to an ideal all-one code 36.3 dB.

In this embodiment of this application, Ngroup, that is, a quantity of spreading code groups in a spreading sequence, may be adjusted, so that a tradeoff and a balance between ranging performance and security can be achieved based on a requirement.

It can be learned from FIG. 9 that, when a special spreading code solution 2 (that is, the spreading code in the proposed special spread mode V2) provided in this embodiment of this application is used, the peak power difference is further increased to about 43.5 dB.

The following describes, with reference to FIG. 10 to FIG. 12, a signal transmission apparatus configured to perform the foregoing signal transmission method.

It can be understood that, to implement the foregoing functions, the signal transmission apparatus includes a corresponding hardware and/or software module for performing each function. With reference to the example algorithm steps described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of the embodiments of this application.

In embodiments of this application, the signal transmission apparatus may be divided into functional modules based on the foregoing method examples. For example, each functional module corresponding to each function may be obtained through division, or two or more functions may be integrated into one processing module. The integrated module may be implemented in a form of hardware. It should be noted that, in this embodiment, division into the modules is an example, is merely logical function division, and may be other division during actual implementation.

When each functional module is obtained through division based on each corresponding function, FIG. 10 is a possible schematic composition diagram of the signal transmission apparatus in the foregoing embodiment. As shown in FIG. 10, the signal transmission apparatus 1000 may include a generation unit 1001 and a sending unit 1002.

The generation unit 1001 is configured to spread a preamble symbol based on a first spreading code sequence to generate a first signal, where the first signal is used to determine a channel impulse response.

The sending unit 1002 is configured to send the first signal to a receiver. The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

FIG. 11 is another possible schematic composition diagram of the signal transmission apparatus in the foregoing embodiment. As shown in FIG. 11, the signal transmission apparatus 1100 may include a receiving unit 1101 and a determining unit 1102.

The receiving unit 1101 is configured to receive a first signal sent by a transmitter, where the first signal is a signal generated by spreading a first spreading code sequence.

The determining unit 1102 is configured to determine a channel impulse response based on the first spreading code sequence and the first signal. The first spreading code sequence includes a plurality of spreading code groups, each spreading code group includes a plurality of same spreading codes and at least one guard symbol, a first bit and/or a last bit of each spreading code group are/is a guard symbol, and the plurality of spreading code groups include at least two spreading code groups with different spreading codes.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

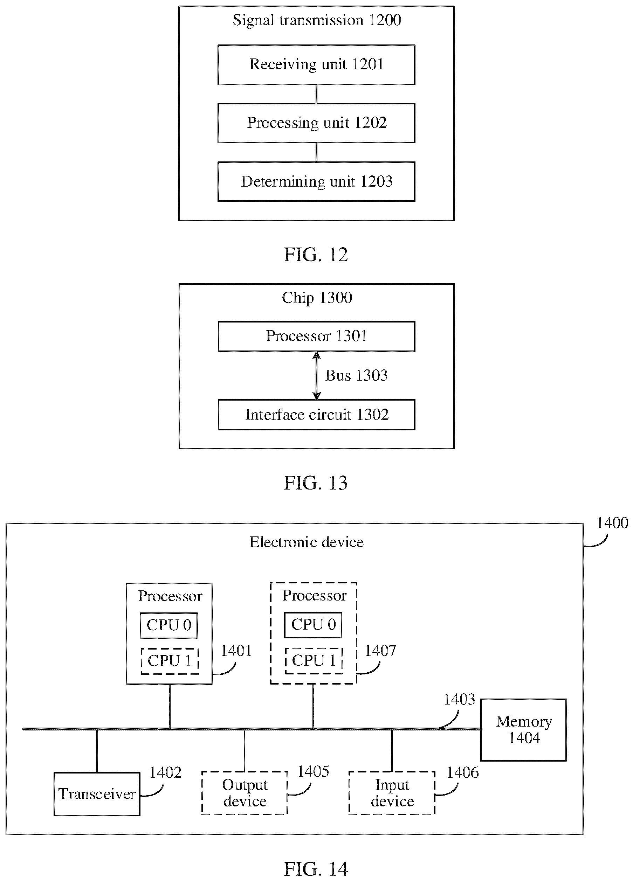

FIG. 12 is another possible schematic composition diagram of the signal transmission apparatus in the foregoing embodiment. As shown in FIG. 12, the signal transmission apparatus 1200 may include a receiving unit 1201, a processing unit 1202, and a determining unit 1203.

The receiving unit 1201 is configured to receive a second signal sent by a transmitter, and the second signal is a signal generated by spreading a second spreading code sequence.

The processing unit 1202 is configured to replace a first bit and/or a last bit of each spreading code group in the second spreading code sequence with a guard symbol to obtain a third spreading code sequence.

The determining unit 1203 is configured to determine a channel impulse response based on the third spreading code sequence and the second signal. The second spreading code sequence includes a plurality of spreading code groups, and each spreading code group includes a plurality of same spreading codes.

In a possible implementation, the guard symbol may include a zero code.

In a possible implementation, the plurality of spreading code groups may have a same quantity of symbols.

In a possible implementation, adjacent spreading code groups in the plurality of spreading code groups have different spreading codes.

FIG. 13 is a schematic diagram of a structure of a chip 1300. The chip 1300 includes one or more processors 1301 and an interface circuit 1302. Optionally, the chip 1300 may further include a bus 1303.

The processor 1301 may be an integrated circuit chip and has a signal processing capability. During implementation, steps of the foregoing encoding and decoding method may be implemented by using hardware integrated logical circuit in the processor 1301, or by using instructions in a form of software.

The processor 1301 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like.

The interface circuit 1302 may be configured to send or receive data, instructions, or information. The processor 1301 may process the data, the instructions, or other information received by the interface circuit 1302, and may send processing completion information by using the interface circuit 1302.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the signal transmission apparatus in embodiments of this application. Optionally, the interface circuit 1302 may be configured to output an execution result of the processor 1301. For the encoding and decoding method provided in one or more embodiments of this application, refer to the foregoing embodiments. Details are not described herein again.

It should be noted that functions corresponding to each of the processor 1301 and the interface circuit 1302 may be implemented by using a hardware design, may be implemented by using a software design, or may be implemented by combining software and hardware. This is not limited herein.

FIG. 14 is a schematic diagram of a structure of an electronic device according to an embodiment of this application. The electronic device 400 may be a signal transmission apparatus or a chip or a functional module in a signal transmission apparatus. As shown in FIG. 14, the electronic device 1400 includes a processor 1401, a transceiver 1402, and a communication line 1403.

The processor 1401 is configured to perform any step in the method embodiment shown in FIG. 1, and when performing the step, may choose to invoke the transceiver 1402 and the communication line 1403 to complete a corresponding operation.

Further, the electronic device 1400 may further include a memory 1404. The processor 1401, the memory 1404, and the transceiver 1402 may be connected through the communication line 1403.

The processor 1401 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1401 may alternatively be another apparatus having a processing function, for example, a circuit, a component, or a software module. This is not limited.

The transceiver 1402 is configured to communicate with another device or another communication network. The another communication network may be Ethernet, a radio access network (radio access network, RAN), a wireless local area network (wireless local area network, WLAN), or the like. The transceiver 1402 may be a module, a circuit, a transceiver, or any apparatus that can implement communication.

The transceiver 1402 is mainly configured to receive and send data, and may include a transmitter and a receiver, separately for sending and receiving a signal. Operations other than signal receiving and sending are implemented by the processor, such as information processing, calculation, and the like.

The communication line 1403 is configured to transmit information between components included in the electronic device 1400.

In a design, the processor may be considered as a logic circuit, and the transceiver may be considered as an interface circuit.

The memory 1404 is configured to store instructions. The instructions may be a computer program.

The memory 1404 may be a volatile memory or a non-volatile memory, or may include both of a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). The memory 1404 may further be a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium, another magnetic storage device, or the like. It should be noted that the memory of the systems and methods described in this specification includes but is not limited to these memories and any memory of another proper type.

It should be noted that the memory 1404 may exist independently of the processor 1401, or may be integrated with the processor 1401. The memory 1404 may be configured to store instructions, program code, some data, or the like. The memory 1404 may be located inside the electronic device 1400, or may be located outside the electronic device 1400. This is not limited. The processor 1401 is configured to execute the instructions stored in the memory 1404, to implement the method provided in the foregoing embodiment of this application.

In an example, the processor 1401 may include one or more processors, for example, a CPU 0 and a CPU 1 in FIG. 14.

In an optional implementation, the electronic device 1400 includes a plurality of processors. For example, in addition to the processor 1401 in FIG. 14, the electronic device 1400 may further include a processor 1407.

In an optional implementation, the electronic device 1400 further includes an output device 1405 and an input device 1406. For example, the input device 1406 is a device such as a keyboard, a mouse, a microphone, a joystick, or the like, and the output device 1405 is a device such as a display screen, a speaker (speaker), or the like.

It should be noted that the electronic device 1400 may be a chip system or a device having a structure similar to that in FIG. 14. The chip system may include a chip, or may include a chip and another discrete component. Mutual reference may be made to actions, terms, and the like in embodiments of this application. This is not limited. In embodiments of this application, names of messages exchanged between devices, names of parameters in the messages, or the like are merely examples. Other names may alternatively be used during specific implementation. This is not limited. In addition, a composition structure shown in FIG. 14 does not constitute a limitation on the electronic device 1400. In addition to the components shown in FIG. 14, the electronic device 1400 may include more or fewer components than those shown in FIG. 14, or combine some components, or have different component arrangements.

The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal oxide semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

An embodiment of this application further provides a signal transmission apparatus. The apparatus includes at least one processor. When the at least one processor executes program code or instructions, the foregoing related method steps are implemented to implement the signal transmission method in the foregoing embodiment.

Optionally, the apparatus may further include at least one memory, and the at least one memory is configured to store the program code or the instructions.

An embodiment of this application further provides a computer storage medium. The computer storage medium stores computer instructions. When the computer instructions are run on a signal transmission apparatus, the signal transmission apparatus is enabled to perform the foregoing related method steps, to implement the signal transmission method in the foregoing embodiment.

An embodiment of this application further provides a computer program product. When the computer program product runs on a computer, the computer is enabled to perform the foregoing related steps, to implement the signal transmission method in the foregoing embodiment.

An embodiment of this application further provides a signal transmission apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the signal transmission method in the foregoing method embodiment.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, wherein the method comprises:
spreading a preamble symbol based on a first spreading code sequence to generate a first signal, wherein the first signal is used to determine a channel impulse response; and
sending the first signal to a receiver, wherein
the first spreading code sequence comprises a plurality of spreading code groups, each spreading code group comprises a plurality of same spreading codes and at least one guard symbol, a first bit and/or a last bit of each spreading code group are/is a guard symbol, and the plurality of spreading code groups comprise at least two spreading code groups with different spreading codes.

2. The method according to claim 1, wherein the guard symbol comprises a zero code.

3. A signal transmission method, wherein the method comprises:
receiving a first signal sent by a transmitter, wherein the first signal is a signal generated by spreading a first spreading code sequence; and
determining a channel impulse response based on the first spreading code sequence and the first signal, wherein
the first spreading code sequence comprises a plurality of spreading code groups, each spreading code group comprises a plurality of same spreading codes and at least one guard symbol, a first bit and/or a last bit of each spreading code group are/is a guard symbol, and the plurality of spreading code groups comprise at least two spreading code groups with different spreading codes.

4. The method according to claim 3, wherein the guard symbol comprises a zero code.

5. A signal transmission method, wherein the method comprises:
receiving a second signal sent by a transmitter, wherein the second signal is a signal generated by spreading a second spreading code sequence;
replacing a first bit and/or a last bit of each spreading code group in the second spreading code sequence with a guard symbol to obtain a third spreading code sequence; and
determining a channel impulse response based on the third spreading code sequence and the second signal, wherein
the second spreading code sequence comprises a plurality of spreading code groups, and each spreading code group comprises a plurality of same spreading codes.

6. The method according to claim 5, wherein the guard symbol comprises a zero code.

7. A signal transmission apparatus, wherein the apparatus comprises a generation unit and a sending unit, wherein the generation unit is configured to spread a preamble symbol based on a first spreading code sequence to generate a first signal, wherein the first signal is used to determine a channel impulse response; and
the sending unit is configured to send the first signal to a receiver, wherein
the first spreading code sequence comprises a plurality of spreading code groups, each spreading code group comprises a plurality of same spreading codes and at least one guard symbol, a first bit and/or a last bit of each spreading code group are/is a guard symbol, and the plurality of spreading code groups comprise at least two spreading code groups with different spreading codes.

8. The apparatus according to claim 7, wherein the guard symbol comprises a zero code.

9. A signal transmission apparatus, wherein the apparatus comprises a receiving unit and a determining unit, wherein
the receiving unit is configured to receive a first signal sent by a transmitter, wherein the first signal is a signal generated by spreading a first spreading code sequence; and
the determining unit is configured to determine a channel impulse response based on the first spreading code sequence and the first signal, wherein
the first spreading code sequence comprises a plurality of spreading code groups, each spreading code group comprises a plurality of same spreading codes and at least one guard symbol, a first bit and/or a last bit of each spreading code group are/is a guard symbol, and the plurality of spreading code groups comprise at least two spreading code groups with different spreading codes.

10. The apparatus according to claim 9, wherein the guard symbol comprises a zero code.

11. A signal transmission apparatus, wherein the apparatus comprises a receiving unit, a processing unit, and a determining unit, wherein
the receiving unit is configured to receive a second signal sent by a transmitter, and the second signal is a signal generated by spreading a second spreading code sequence;
the processing unit is configured to replace a first bit and/or a last bit of each spreading code group in the second spreading code sequence with a guard symbol to obtain a third spreading code sequence; and
the determining unit is configured to determine a channel impulse response based on the third spreading code sequence and the second signal, wherein
the second spreading code sequence comprises a plurality of spreading code groups, and each spreading code group comprises a plurality of same spreading codes.

12. The apparatus according to claim 11, wherein the guard symbol comprises a zero code.

13. A signal transmission apparatus, comprising at least one processor and a memory, wherein the at least one processor executes a program or instructions stored in the memory, so that the signal transmission apparatus is enabled to implement the method according to any one of claims 1 to 6.

14. A computer-readable storage medium, configured to store a computer program, wherein when the computer program is run on a computer or a processor, the computer or the processor is enabled to implement the method according to any one of claims 1 to 6.

15. A computer program product, wherein the computer program product comprises instructions, and when the instructions are run on a computer or a processor, the computer or the processor is enabled to implement the method according to any one of claims 1 to 6.
